(19) Europäisches Patentamt
European Patent Office
Office européen des brevets

(11) EP 4 318 716 A1

(12) EUROPEAN PATENT APPLICATION
published in accordance with Art. 153(4) EPC

(43) Date of publication:
**07.02.2024 Bulletin 2024/06**

(21) Application number: **22937669.4**

(22) Date of filing: **09.05.2022**

(51) International Patent Classification (IPC):
***H01M 10/0567*** *(2010.01)* ***H01M 10/0563*** *(2010.01)*
***H01M 10/0525*** *(2010.01)* ***H01M 4/58*** *(2010.01)*
***H01M 4/02*** *(2006.01)* ***H01M 4/36*** *(2006.01)*

(86) International application number:
**PCT/CN2022/091649**

(87) International publication number:
**WO 2023/216051 (16.11.2023 Gazette 2023/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **XU, Ningbo**
  **Ningde, Fujian 352100 (CN)**
- **ZOU, Hailin**
  **Ningde, Fujian 352100 (CN)**
- **CHEN, Peipei**
  **Ningde, Fujian 352100 (CN)**

(74) Representative: **Kraus & Lederer Patentanwälte PartGmbB**
**Thomas-Wimmer-Ring 15**
**80539 München (DE)**

# (54) SECONDARY BATTERY CONTAINING CYCLIC SILOXANE AND ELECTRIC DEVICE

(57) This application relates to a secondary battery containing cyclic siloxane and/or ring-opening polymerization derivatives thereof, where a cyclic structure of the cyclic siloxane has at least one

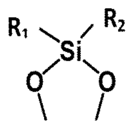

structure, one and only one of $R_1$ and $R_2$ contains a group with stronger electron withdrawing property than phenyl, and the group is directly linked to Si. This application further relates to a battery pack including the secondary battery and an electric apparatus including the secondary battery or the battery pack.

EP 4 318 716 A1

## Description

### TECHNICAL FIELD

This application relates to a secondary battery containing a cyclic siloxane with a specific structure and/or ring-opening polymerization derivatives thereof, as well as a battery pack containing the secondary battery and an electric apparatus including same.

### BACKGROUND

Featured by low costs, long service life, high safety, and the like, secondary batteries have become the most popular energy storage system, and have been currently widely used in battery electric vehicles, hybrid electric vehicles, smart power grids, and other fields. Secondary batteries are one of the important energy storage devices, especially lithium-ion batteries. Lithium-ion batteries (LIB) dominate the market for portable electronic devices and have gained significant traction in electric vehicles (EV) and hybrid electric vehicles (HEV) due to their high energy density, lightweight, and long lifespan. Among the materials developed for high energy density LIBs for EVs, silicon (Si) and nickel (Ni)-rich layered oxides have become the main choices for electrode material preparation due to their high energy storage capacity. However, Si-based anodes and Ni-rich cathodes suffer from structural instability due to anisotropic volume changes and interface deterioration. Unlike graphite negative electrodes, Si suffers from extreme volume change (about 300%) during lithiation/delithiation, resulting in SEI thickening due to continuous electrolyte decomposition and eventual electrolyte depletion. This severely hinders its practical application. Due to a huge volume effect of active materials, which mainly destroys the interface structure, currently common improvement solutions are mainly focused on improving the interface stability.

To adapt to the huge volume effect, stable interface components play an important role. Current interface modification is still about using an electrolyte additive to generate a layer of interface components covering surface of an active material. This solution, however, still cannot avoid interface structure fracture, excessive consumption of electrolyte, and other problems caused by the huge volume effect. Therefore, one of the important directions to improve the huge volume effect of active materials is to develop interface structures that are not influenced by the volume effect of the active materials and suppress the contact between the electrolyte solvent and the active materials.

### SUMMARY

This application has been made in view of the foregoing issues. An objective of this application is to provide a secondary battery, so as to solve the technical problems of insufficient interface stability due to the volume effect and of further improving kinetic performance of batteries.

To achieve the foregoing objective, a first aspect of this application provides a secondary battery containing cyclic siloxane and/or ring-opening polymerization derivatives thereof, where a cyclic structure of the cyclic siloxane has at least one

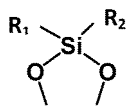

structure, one and only one of $R_1$ and $R_2$ contains a group with stronger electron withdrawing property than phenyl, and the group is directly linked to Si.

In this application, the cyclic siloxane and/or ring-opening polymerization derivatives thereof are contained in an electrolyte, a positive electrode active material, and/or a negative electrode active material of the secondary battery. In any embodiment, a percentage of the cyclic siloxane and/or ring-opening polymerization derivatives thereof in each material portion (positive electrode, negative electrode, and electrolyte) of the secondary battery is 0.001 wt%-20 wt%. In some embodiments, the cyclic siloxane is present in the positive electrode active material, with a percentage of 0.05-3 wt% based on a weight of the positive electrode active material. In some other embodiments, the cyclic siloxane is present in the negative electrode active material, with a percentage of 0.5-15 wt% based on a weight of the negative electrode active material. In some other embodiments, the cyclic siloxane is present as an additive in the electrolyte, with a percentage of 0.1-5 wt% based on a weight of the electrolyte. With the siloxane within correspondingly specified content ranges in different components of the secondary battery, performance improvement can be further optimized for different components of the secondary battery.

In any embodiment, the cyclic siloxane has a cyclic structure of a 3- to 8-membered ring. In a further embodiment,

the cyclic siloxane has a cyclic structure of a 5-membered ring, a 6-membered ring, or an 8-membered ring. By selecting a cyclic siloxane with a specific number of ring members, it is possible to further improve the interface stability of the secondary battery of the present invention.

In any embodiment, the cyclic siloxane has a structure shown below in formula 1 to formula 19:

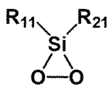
formula 1

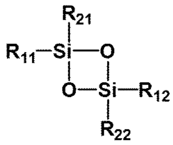
formula 2

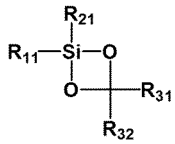
formula 3

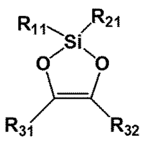
formula 4

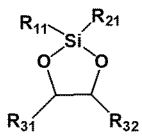
formula 5

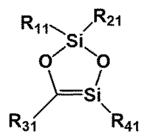
formula 6

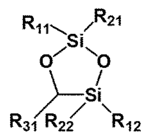
formula 7

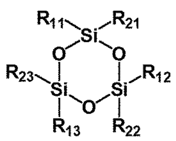
formula 8

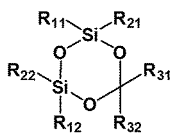
formula 9

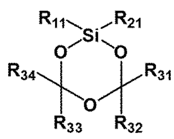
formula 10

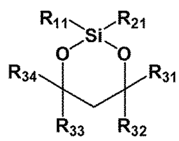
formula 11

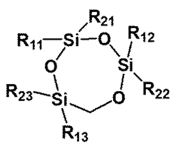
formula 12

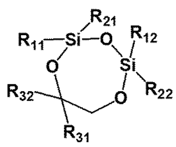
formula 13

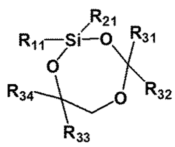
formula 14

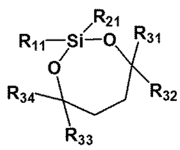
formula 15

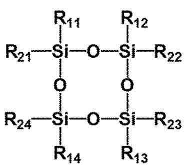
formula 16

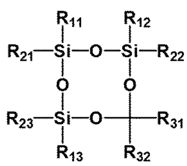
formula 17

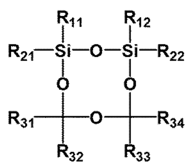
formula 18

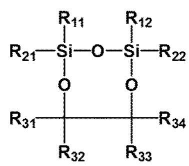
formula 19

where $R_{11}$ to $R_{12}$, $R_{21}$ to $R_{24}$, and $R_{31}$ to $R_{34}$ are each independently selected from H, halogen, substituted or unsubstituted $C_1$-$C_{10}$ alkyl, substituted or unsubstituted $C_2$-$C_{10}$ alkenyl, substituted or unsubstituted $C_2$-$C_{10}$ alkynyl, substituted or unsubstituted $C_1$-$C_{10}$ alkoxy, substituted or unsubstituted $C_6$-$C_{14}$ aryl, cyano, carboxyl, carbonyl, ester, hydroxyl, nitro, sulfonate, sulfinate, or isocyanato, where in the case of substitution, the substituent is selected from halogen, or

two groups in $R_{11}$ to $R_{16}$ and $R_{21}$ to $R_{24}$ form a 4- to 6-membered heterocyclic ring together with the groups linked thereto, or

the ring-opening polymerization derivatives are derived from a cyclic siloxane having the structure shown in formula 1 to formula 19,

provided that in the cyclic siloxane, one and only one of $R_1$ and $R_2$ in at least one

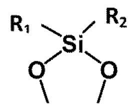

structure of the cyclic structure contains a group with stronger electron withdrawing property than phenyl and that the group is directly linked to Si, where the group with stronger electron withdrawing property than phenyl is selected from halogen, substituted or unsubstituted $C_2$-$C_{10}$ alkynyl, substituted or unsubstituted $C_1$-$C_{10}$ alkoxy, cyano, carboxyl, carbonyl, ester, hydroxyl, nitro, sulfonate, sulfinate, or isocyanato, where in the case of substitution, the substituent is selected from halogen. By selecting the cyclic siloxane and/or ring-opening polymerization derivatives thereof having a specific chemical structure as defined in the above formulas, it is possible to obtain a secondary battery with significantly improved interface stability.

In any embodiment, in a cyclic structure of the cyclic siloxane, one and only one of $R_1$ and $R_2$ in all

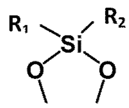

structures contains a group with stronger electron withdrawing property than phenyl, and the group is directly linked to Si. In a further embodiment, the cyclic structure of the cyclic siloxane does not include the following

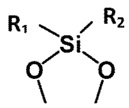

structure, where both $R_1$ and $R_2$ contain a group with stronger electron withdrawing property than phenyl, and the group is directly linked to Si. By further controlling the number and substitution sites of the groups with stronger electron withdrawing property than phenyl, it is possible to further ensure the effect of the cyclic siloxane in improving the interface stability of the secondary battery.

In any embodiment, the cyclic siloxane has a structure selected from one or more of formula 4, formula 5, formula 8, and formula 16. In any embodiment, $R_{11}$ to $R_{12}$, $R_{21}$ to $R_{24}$, and $R_{31}$ to $R_{34}$ are each independently selected from H, halogen, $C_1$-$C_6$ alkyl, $C_1$-$C_6$ alkoxy, isocyanato, or cyano. In a further embodiment, the silicate has the structure of formula 5, where $R_{11}$ is methyl, $R_{21}$ is methoxy, and both $R_{31}$ and $R_{32}$ are H; or the silicate has the structure of formula 8, where $R_{11}$ to $R_{13}$ are methyl, and $R_{21}$ to $R_{23}$ are selected from isocyanato or cyano; or the silicate has the structure of formula 13, where $R_{11}$ to $R_{14}$ are methyl, and $R_{21}$ to $R_{24}$ are selected from isocyanato or halogen. By further selecting the chemical structural formula of the cyclic siloxane and the type of substituent group therein, it is possible to further adjust the stabilization of the cyclic siloxane to control cycling performance of the secondary battery.

In any embodiment, the positive electrode active material of the secondary battery is selected from one or more of lithium iron phosphate, lithium manganese iron phosphate, lithium cobalt oxide, lithium nickel oxide, lithium manganese oxide, lithium nickel manganese oxide, lithium nickel cobalt manganese oxide, lithium nickel cobalt aluminum oxides, lithium-rich materials, sodium oxide compounds, potassium oxide compounds, and compounds obtained by adding other transition metals or non-transition metals to the foregoing compounds. In any embodiment, the negative electrode active material of the secondary battery is selected from one or more of graphite, soft carbon, hard carbon, mesocarbon microbeads, carbon fibers, carbon nanotubes, elemental silicon, silicon oxide compounds, silicon-carbon composites, lithium titanate, lithium metal sodium metal, potassium metal, and compounds obtained by adding other transition metals or non-transition metals to the foregoing materials.

In any embodiment, the secondary battery further includes an organic solvent selected from one or more of linear carbonates, cyclic carbonates, carboxylates, and ethers. The organic solvent includes one or more of diethyl carbonate, dipropyl carbonate, ethyl methyl carbonate, methyl propyl carbonate, ethylene propyl carbonate, ethylene carbonate, propylene carbonate, butylene carbonate, γ-butyrolactone, methyl formate, ethyl acetate ester, propyl acetate, methyl propionate, ethyl propionate, tetrahydrofuran, dimethyl ether, diethyl ether, and ethylene glycol dimethyl ether.

In any embodiment, the secondary battery further includes an electrolyte additive selected from one or more of a cyclic carbonate compound containing unsaturated bonds, a cyclic carbonate compound substituted by halogen, a sulfate compound, a sulfite compound, a sultone compound, a disulfonate compound, a nitrile compound, an aromatic compound, an isocyanate compound, a phosphonitrile compound, a cyclic anhydride compound, a phosphite compound,

a phosphate compound, a borate compound, and a carboxylate compound.

In any embodiment, the secondary battery further includes an electrolytic salt selected from one or more of $LiPF_6$, $LiBF_4$, LiBOB, $LiAsF_6$, $Li(FSO_2)_2N$, $LiCF_3SO_3$, and $LiClO_4$.

A second aspect of this application provides a battery pack including the secondary battery according to the first aspect of this application.

A third aspect of this application provides an electric apparatus including the secondary battery according to the first aspect of this application or the battery pack according to the second aspect of this application.

## BRIEF DESCRIPTION OF DRAWINGS

To describe the technical solutions in the embodiments of this application more clearly, the following briefly describes the accompanying drawings required for describing embodiments of this application. Apparently, the accompanying drawings in the following description show only some embodiments of this application, and persons of ordinary skill in the art may still derive other drawings from these accompanying drawings without creative efforts.

FIG. 1 is a schematic diagram of a lithium-ion secondary battery according to an embodiment of this application.
FIG. 2 is an exploded view of the lithium-ion secondary battery according to the embodiment of this application in FIG. 1.
FIG. 3 is a schematic diagram of a battery pack according to an embodiment of this application.
FIG. 4 is an exploded view of the battery pack according to the embodiment of this application in FIG. 3.
FIG. 5 is a schematic diagram of a battery pack used as a power source according to an embodiment of this application.

Description of reference signs

1. battery pack;
2. upper box body;
3. lower box body;
4. battery module;
5. lithium-ion secondary battery
51. housing;
52. electrode assembly; and
53. cover plate.

## DESCRIPTION OF EMBODIMENTS

For brevity, this application specifically discloses some numerical ranges. However, any lower limit may be combined with any upper limit to form an unspecified range, and any lower limit may be combined with another lower limit to form an unspecified range, and likewise, any upper limit may be combined with any other upper limit to form an unspecified range. In addition, each individually disclosed point or individual single numerical value may itself be a lower limit or an upper limit which ca be combined with any other point or individual numerical value or combined with another lower limit or upper limit to form a range not expressly recorded.

In secondary batteries with high energy density, silicon (Si) and nickel (Ni)-rich layered oxides have become the main choices for preparing electrode materials. However, Si-based anodes and Ni-rich cathodes suffer from structural instability due to anisotropic volume changes and interface deterioration. To address the problems of interface structure fracture and excessive consumption of electrolyte due to the huge volume effect, an objective of the present invention first is to provide a highly resilient interface component for suppressing fracture of the interface and excessive decomposition of the electrolyte solvent, and to provide a long-life secondary battery using the interface component.

Specifically, a first aspect of this application provides a secondary battery containing cyclic siloxane and/or ring-opening polymerization derivatives thereof, where a cyclic structure of the cyclic siloxane has at least one

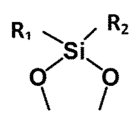

structure, one and only one of $R_1$ and $R_2$ contains a group with stronger electron withdrawing property than phenyl, and

the group is directly linked to Si.

The inventors have found that by including the cyclic siloxane and/or ring-opening polymerization derivatives thereof having a specific structure as described above, positive and negative electrode active material interfaces of the secondary battery of this application can be covered by a silicone rubber-like structure. The main chain of silicone rubber is a highly stable -Si-O-Si- bond, and side groups are different organic substituent groups. Its distinctive feature is its high temperature stability. In a high-temperature environment above 200°C, silicone rubber can still maintain a certain degree of flexibility, resilience, and surface hardness, and has no obvious change in mechanical properties. The glass transition temperature of silicone rubber is generally -70--50°C and can reach -100°C for silicon rubber with special formulations, which indicates its excellent low temperature performance. In addition, silicone rubber is non-toxic, tasteless, odorless, non-adhesive to human tissues, and has anti-coagulant effect and very little reactivity to muscle tissue. In the monomer of silicone rubber, the side chain of silicon is usually methyl, phenyl, vinyl, and other organic groups, and silicone rubber can be synthesized by ring-opening polymerization under strong acid or strong alkali conditions. However, it is difficult for such monomers to undergo ring-opening polymerization to form a silicone rubber-like structure under weak acid conditions of an electrolyte. Therefore, in the present invention, one of the side chain groups of the cyclic siloxane is introduced into a strong electron withdrawing group with stronger electron withdrawing capability than phenyl, thereby increasing the electropositivity of the silicon atom. The order of electron withdrawing capability of common substituents is: $-N^+R_3$ > $-NO_2$ > -CN > -COOH > -COOR > -C=O > F > Cl > Br > I > C=C > $-OCH_3$ > -OH > $-C_6H_5$ > C=C > H > $-CH_3$ > Et > Pr > Bu. Such cyclic siloxane containing strong electron withdrawing groups can undergo ring-opening polymerization in weakly acidic electrolytes containing small amounts of $PF_5$ and HF to produce a silicone rubber-like structure, to stabilize the electrode/electrolyte interfaces and improve battery performance.

A group contained in the branched chain of the cyclic siloxane has a stronger electron withdrawing property than $-C_6H_5$ and is directly linked to Si, which can increase the electropositivity of the silicon atom, allowing the cyclic siloxane to undergo ring-opening polymerization in a weakly acidic electrolyte containing small amounts of $PF_5$ and HF to form silicone rubber-like structures. When groups directly linked to silicon atoms are all weak electron withdrawing groups, a chain initiation process of ring-opening polymerization is less likely to occur in a silicone-oxygen bond, resulting in failure of effective polymerization for forming a silicone rubber-like structure. When two groups linked to silicon atoms of the siloxane are both strong electron withdrawing groups, the electropositivity of the silicon atom is too strong, breakage is too easy to occur, and inorganic compounds or small-molecule organic structures are more likely to be formed, resulting in failure of effective polymerization for forming a silicone rubber-like structure. With at least one

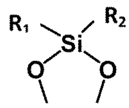

structure provided in the cyclic structure of the cyclic siloxane, one and only one of $R_1$ and $R_2$ containing a group with stronger electron withdrawing property than phenyl, and the group being directly linked to Si, the secondary battery containing the cyclic siloxane and/or ring-opening polymerization derivatives thereof can have more stable electrode/electrolyte interfaces. Even if the secondary battery undergoes significant volume changes, no interface structure fracture and no excessive decomposition of the electrolyte solvent occur, so that the secondary battery maintains good battery performance over a long period of time. It should be noted that the other side of the single bond linked to oxygen in the structure is a bonding site at which oxygen is linked to other groups, rather than a methyl group. $R_1$ and $R_2$ may be any chemically suitable organic group and persons skilled in the art can choose a suitable substituent under the premise of satisfying the above limitations.

In this application, the cyclic siloxane and/or ring-opening polymerization derivatives thereof are contained in an electrolyte, a positive electrode active material, and/or a negative electrode active material of the secondary battery. In some embodiments, a percentage of the cyclic siloxane and/or ring-opening polymerization derivatives thereof in the secondary battery is 0.001 wt%-20 wt%, optionally 0.01 wt%-15 wt%. In some embodiments, the cyclic siloxane is present in the positive electrode active material, with a percentage of 0.05-3 wt% based on a weight of the positive electrode active material, optionally 0.1-2 wt%. The percentage of the cyclic siloxane may be slightly lower due to a relatively small volume effect of the positive electrode. In some embodiments, the cyclic siloxane is present in the negative electrode active material, with a percentage of 0.5-15 wt% based on a weight of the negative electrode active material, optionally 1-10 wt%. Because the volume effect of the negative electrode is large, when the cyclic siloxane is present in the negative electrode active material, a relatively high percentage of the cyclic siloxane is added. In some other embodiments, the cyclic siloxane is present as an additive in the electrolyte, with a percentage of 0.1-5 wt% based on a weight of the electrolyte, optionally 0.5-3 wt%. With the siloxane within correspondingly specified content ranges in different components of the secondary battery, performance improvement can be further optimized for different components of the secondary battery.

In some embodiments, the cyclic siloxane has a cyclic structure of a 3- to 8-membered ring. In a further embodiment, the cyclic siloxane has a cyclic structure of a 5-membered ring, a 6-membered ring, or an 8-membered ring. When the ring is a three-membered or four-membered ring, the ring is more active and less stable and may tend to form an inorganic structure, and polymerization becomes more difficult to occur. When the ring is a seven-membered ring, its structure is relatively stable, the ring-opening activity is lower, and polymerization becomes more difficult. When the ring is a ring with more than 8 members, the tension generated by the ring is weakened and ring-opening polymerization to form silicone rubber is less likely to occur. By selecting a cyclic siloxane with a specific number of ring members, it is possible to facilitate ring-opening polymerization of the cyclic siloxane to form silicone rubber, further improving the interface stability of the secondary battery of the present invention.

In some embodiments, the cyclic siloxane has a structure shown below in formula 1 to formula 19:

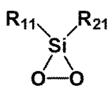
formula 1
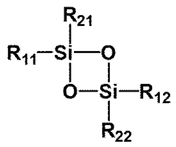
formula 2
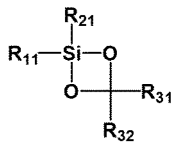
formula 3

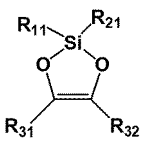
formula 4
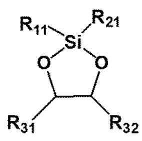
formula 5
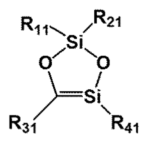
formula 6
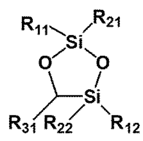
formula 7

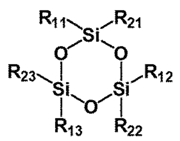
formula 8
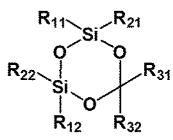
formula 9
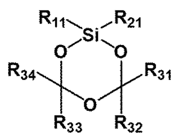
formula 10
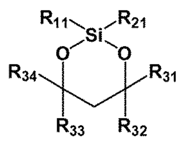
formula 11

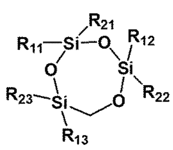
formula 12
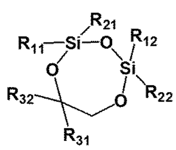
formula 13
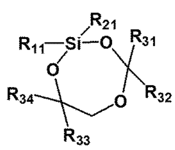
formula 14
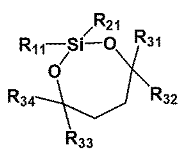
formula 15

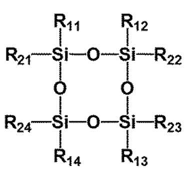
formula 16
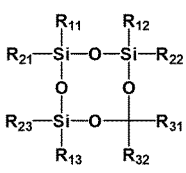
formula 17
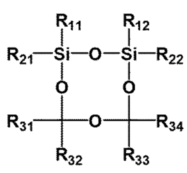
formula 18
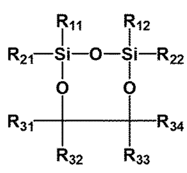
formula 19

where $R_{11}$ to $R_{12}$, $R_{21}$ to $R_{24}$, and $R_{31}$ to $R_{34}$ are each independently selected from H, halogen, substituted or unsubstituted $C_1$-$C_{10}$ alkyl, substituted or unsubstituted $C_2$-$C_{10}$ alkenyl, substituted or unsubstituted $C_2$-$C_{10}$ alkynyl, substituted or unsubstituted $C_1$-$C_{10}$ alkoxy, substituted or unsubstituted $C_6$-$C_{14}$ aryl, cyano, carboxyl, carbonyl, ester, hydroxyl, nitro, sulfonate, sulfinate, or isocyanato, where in the case of substitution, the substituent is selected from halogen, or

two groups in $R_{11}$ to $R_{16}$ and $R_{21}$ to $R_{24}$ form a 4- to 6-membered heterocyclic ring together with the groups linked

thereto, or

the ring-opening polymerization derivatives are derived from a cyclic siloxane having the structure shown in formula 1 to formula 19,

provided that in the cyclic siloxane, one and only one of $R_1$ and $R_2$ in at least one structure of the cyclic structure contains a group with stronger electron withdrawing property than phenyl and that the group is directly linked to Si, where the group with stronger electron withdrawing property than phenyl is selected from halogen, substituted or unsubstituted $C_2$-$C_{10}$ alkynyl, substituted or unsubstituted $C_1$-$C_{10}$ alkoxy, cyano, carboxyl, carbonyl, ester, hydroxyl, nitro, sulfonate, sulfinate, or isocyanato, where in the case of substitution, the substituent is selected from halogen.

By selecting the cyclic siloxane and/or ring-opening polymerization derivatives thereof having a specific chemical structure as defined in the above formulas, it is possible to obtain a secondary battery with significantly improved interface stability.

In some embodiments, in a cyclic structure of the cyclic siloxane, one and only one of $R_1$ and $R_2$ in all

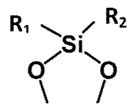

structures contains a group with stronger electron withdrawing property than phenyl, and the group is directly linked to Si. In this case, the cyclic siloxane is more likely to undergo ring-opening polymerization reactions to form silicone rubber, which improves its stabilizing effect on the secondary battery.

In some embodiments, the cyclic structure of the cyclic siloxane does not include the following

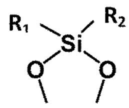

structure, where both $R_1$ and $R_2$ contain a group with stronger electron withdrawing property than phenyl, and the group is directly linked to Si. By further controlling the number and substitution sites of the groups with stronger electron withdrawing property than phenyl, it is possible to further ensure the effect of the cyclic siloxane in improving the interface stability of the secondary battery. In particular, the resulting cyclic siloxane is unlikely to form inorganic compounds or small-molecule organic structures that would make ring-opening polymerization impossible.

In some embodiments, the cyclic siloxane has a structure selected from one or more of formula 4, formula 5, formula 8, and formula 16. In any embodiment, $R_{11}$ to $R_{12}$, $R_{21}$ to $R_{24}$, and $R_{31}$ to $R_{34}$ are each independently selected from H, halogen, $C_1$-$C_6$ alkyl, $C_1$-$C_6$ alkoxy, isocyanato, or cyano. In a further embodiment, the silicate has the structure of formula 5, where Rn is methyl, $R_{21}$ is methoxy, and both $R_{31}$ and $R_{32}$ are H; or the silicate has the structure of formula 8, where $R_{11}$ to $R_{13}$ are all methyl, and $R_{21}$ to $R_{23}$ are selected from isocyanato or cyano; or the silicate has the structure of formula 13, where $R_{11}$ to $R_{14}$ are all methyl, and $R_{21}$ to $R_{24}$ are selected from isocyanato or halogen. By further selecting the chemical structural formula of the cyclic siloxane and the type of substituent group therein, it is possible to further adjust the stabilization of the cyclic siloxane to control cycling performance of the secondary battery.

In some embodiments, the positive electrode active material of the secondary battery is selected from one or more of lithium iron phosphate, lithium manganese iron phosphate, lithium cobalt oxide, lithium nickel oxide, lithium manganese oxide, lithium nickel manganese oxide, lithium nickel cobalt manganese oxide, lithium nickel cobalt aluminum oxides, lithium-rich materials, sodium oxide compounds, potassium oxide compounds, and compounds obtained by adding other transition metals or non-transition metals to the foregoing compounds. In any embodiment, the negative electrode active material of the secondary battery is selected from one or more of graphite, soft carbon, hard carbon, mesocarbon microbeads, carbon fibers, carbon nanotubes, elemental silicon, silicon oxide compounds, silicon-carbon composites, lithium titanate, lithium metal sodium metal, potassium metal, and compounds obtained by adding other transition metals or non-transition metals to the foregoing materials.

In any embodiment, the secondary battery further includes an organic solvent selected from one or more of linear carbonates, cyclic carbonates, carboxylates, and ethers. The organic solvent includes one or more of diethyl carbonate, dipropyl carbonate, ethyl methyl carbonate, methyl propyl carbonate, ethylene propyl carbonate, ethylene carbonate, propylene carbonate, butylene carbonate, γ-butyrolactone, methyl formate, ethyl acetate ester, propyl acetate, methyl propionate, ethyl propionate, tetrahydrofuran, dimethyl ether, diethyl ether, and ethylene glycol dimethyl ether.

In any embodiment, the secondary battery further includes an electrolyte additive selected from one or more of a cyclic carbonate compound containing unsaturated bonds, a cyclic carbonate compound substituted by halogen, a

sulfate compound, a sulfite compound, a sultone compound, a disulfonate compound, a nitrile compound, an aromatic compound, an isocyanate compound, a phosphonitrile compound, a cyclic anhydride compound, a phosphite compound, a phosphate compound, a borate compound, and a carboxylate compound.

In any embodiment, the secondary battery further includes an electrolytic salt selected from one or more of $LiPF_6$, $LiBF_4$, LiBOB, $LiAsF_6$, $Li(FSO_2)_2N$, $LiCF_3SO_3$, and $LiClO_4$.

Materials of components of the secondary battery of the present invention can be selected in a wide range. In some embodiments, the secondary battery is in particular a lithium-ion secondary battery. Battery cells of the lithium-ion secondary battery are described in detail below. It can be appreciated that the following description also applies to secondary batteries of other systems, such as sodium-ion batteries, except that the positive electrode active material is different.

Generally, a lithium-ion secondary battery includes a positive electrode plate, a negative electrode plate, a separator, and an electrolyte. In a charge and discharge process of the battery, active ions are intercalated and deintercalated between the positive electrode plate and the negative electrode plate. The separator is disposed between the positive electrode plate and the negative electrode plate to provide separation. The electrolyte conducts ions between the positive electrode plate and the negative electrode plate.

[Electrolyte]

The electrolyte conducts ions between the positive electrode plate and the negative electrode plate. The electrolyte includes an electrolytic salt and a solvent.

In this application, the electrolytic salt may be a common electrolytic salt in a lithium-ion secondary battery, for example, a lithium salt, including a lithium salt that may be a high-thermostability salt as described above, a lithium salt as a low-impedance additive, or a lithium salt that inhibits corrosion of aluminum foil. In an example, the electrolytic salt may be selected from more than one of $LiPF_6$ (lithium hexafluorophosphate), $LiBF_4$ (lithium tetrafluoroborate), $LiAsF_6$ (lithium hexafluoroarsenate), LiFSI (lithium bis(fluorosulfonyl)imide), LiTFSI (lithium bis-trifluoromethanesulfonimide), LiTFS (lithium trifluoromethanesulfonat), LiDFOB (lithium difluorooxalatoborate), $LiPO_2F_2$ (lithium difluorophosphate), LiDFOP (lithium bis(oxyalyl)difluorophosphate), $LiSO_3F$ (lithium fluorosulfonate), NDFOP (difluorodioxalate), $Li_2F(SO_2N)_2SO_2F$, KFSI, CsFSI, $Ba(FSI)_2$, and $LiFSO_2NSO_2CH_2CH_2CF_3$.

The solvent is not particularly limited in type, and may be selected based on actual needs. In some embodiments, the solvent is a non-aqueous solvent. Optionally, the solvent may include one or more of linear carbonate, cyclic carbonate, and carboxylate. In some embodiments, the solvent may be selected from more than one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetrahydrofuran, tetramethylene sulfone (SF), methyl sulfone (MSM), ethyl methyl sulfone (EMS), and ethylsulfonyl ethane (ESE).

In some embodiments, the electrolyte further optionally includes other additives. For example, the additives may include a negative electrode film-forming additive, or may include a positive electrode film-forming additive, or may include an additive that can improve some performance of a battery, for example, an additive for improving over-charge performance of the battery, an additive for improving high-temperature performance of the battery, and an additive for improving low-temperature performance of the battery. In an example, the additives are selected from at least one of a cyclic carbonate compound containing unsaturated bonds, a cyclic carbonate compound substituted by halogen, a sulfate compound, a sulfite compound, a sultone compound, a disulfonate compound, a nitrile compound, an aromatic compound, an isocyanate compound, a phosphonitrile compound, a cyclic anhydride compound, a phosphite compound, a phosphate compound, a borate compound, and a carboxylate compound.

**[Positive electrode plate]**

The positive electrode plate includes a positive electrode current collector and a positive electrode active substance layer disposed on at least one surface of the positive electrode current collector, where the positive electrode active substance layer includes a positive electrode active material and a conductive agent.

In an example, the positive electrode current collector includes two back-to-back surfaces in a thickness direction of the positive electrode current collector, and the positive electrode active substance layer is disposed on either or both of the two back-to-back surfaces of the positive electrode current collector.

In the lithium-ion secondary battery in this application, the positive electrode current collector may be a metal foil or a composite current collector. For example, an aluminum foil may be used as the metal foil. The composite current collector may include a polymer material matrix and a metal layer formed on at least one surface of the polymer material

matrix. The composite current collector may be formed by forming a metal material (for example, aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

The positive electrode active substance layer disposed on the surface of the positive electrode current collector includes the positive electrode active material. The positive electrode active material used in this application may have any conventional positive electrode active material used in secondary batteries. In some embodiments, the positive electrode active material may include one or more of lithium transition metal oxide, olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the lithium-containing phosphates with an olivine structure may include but are not limited to one or more of lithium iron phosphate, composite materials of lithium iron phosphate and carbon, lithium manganese phosphate, composite materials of lithium manganese phosphate and carbon, lithium iron manganese phosphate, composite materials of lithium iron manganese phosphate and carbon, and modified compounds thereof. These materials are all commercially available. A surface of the positive electrode active material may be coated with carbon.

The positive electrode active substance layer optionally includes a conductive agent. The conductive agent is not specifically limited in type, and may be selected by persons skilled in the art based on actual needs. In an example, the conductive agent for the positive electrode material may be selected from more than one of superconducting carbon, acetylene black, carbon black, Ketjen black, carbon dots, carbon nanotubes, graphene, and carbon nanofibers.

The positive electrode active substance layer optionally further includes a binder. In an example, the binder may be one or more of styrene-butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

The positive electrode plate in this application may be prepared by using the method known in the art. In an example, a carbon coated positive electrode active material, the conductive agent, and a binder are dissolved in a solvent (for example, N-methylpyrrolidone (NMP)) to form a uniform positive electrode slurry; and the positive electrode slurry is applied on a positive electrode current collector, and processes such as drying and cold pressing are performed to obtain a positive electrode plate.

[Negative electrode plate]

The negative electrode plate includes a negative electrode current collector and a negative electrode material layer disposed on at least one surface of the negative electrode current collector, and the negative electrode material layer includes a negative electrode active substance.

In an example, the negative electrode current collector has two back-to-back surfaces in a thickness direction thereof, and the negative electrode material layer is disposed on either or both of the two back-to-back surfaces of the negative electrode current collector.

In the lithium-ion secondary battery in this application, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (for example, copper, copper alloy, nickel, nickel alloy, titanium, titanium alloy, silver, and silver alloy) on the polymer material matrix (for example, matrices of polypropylene (PP), polyethylene terephthalate (PET), polybutylene terephthalate (PBT), polystyrene (PS), and polyethylene (PE)).

In the lithium-ion secondary battery in this application, the negative electrode material layer usually includes a negative electrode active substance, an optional binder, an optional conductive agent, and other optional additives, and is usually formed by being coated with a negative electrode slurry and dried. The negative electrode slurry is usually obtained by dispersing the negative electrode active substance and the optional conductive agent, the optional binder, and the like in a solvent and stirring them to a uniform mixture. The solvent may be N-methylpyrrolidone (NMP) or deionized water.

A specific type of the negative electrode active substance is not limited. An active substance known in the art and applicable to the negative electrode of the lithium-ion secondary battery may be used, and those skilled in the art may select an active substance based on actual needs. In an example, the negative electrode active substance may be selected from one or more of graphite, soft carbon, hard carbon, mesocarbon microbeads, carbon fibers, carbon nanotubes, elemental silicon, silicon oxide compounds, silicon-carbon composites, and lithium titanate.

In an example, the conductive agent may be selected from more than one of superconducting carbon, acetylene

black, carbon black, Ketjen black, carbon dots, carbon nanotubes, graphene, and carbon nanofibers.

In an example, the binder may be selected from more than one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

The other optional additive is, for example, a thickener (for example, sodium carboxymethyl cellulose (CMC-Na)).

[Separator]

The lithium-ion secondary battery using an electrolyte further includes a separator. The separator is disposed between the positive electrode plate and the negative electrode plate to provide separation. The separator is not limited to any particular type in this application, and may be any well-known porous separator with good chemical stability and mechanical stability. In some embodiments, the separator may be made of a material selected from more than one of glass fiber, nonwoven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. A material of the soft pack may be plastic. As the plastic, polypropylene (PP), polybutylene terephthalate (PBT), and polybutylene succinate (PBS) may be listed.

The secondary battery is not limited to any particular shape in this application, and may be cylindrical, rectangular, or any other shape. For example, FIG. 1 shows a lithium-ion secondary battery 5 of a square structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or stacking. The electrode assembly 52 is packaged in the accommodating cavity. The electrolyte infiltrates the electrode assembly 52. There may be one or more electrode assemblies 52 in the lithium-ion secondary battery 5, and persons skilled in the art may make choices based on actual needs.

In some embodiments, lithium-ion secondary batteries may be assembled into a battery module 4, and the battery module 4 may include one or more lithium-ion secondary batteries. A specific quantity may be chosen by persons skilled in the art based on use and capacity of the battery module. In the battery module 4, a plurality of lithium-ion secondary batteries 5 may be sequentially arranged in a length direction of the battery module. Certainly, the batteries may alternatively be arranged in any other manners. Further, the plurality of lithium-ion secondary batteries 5 may be fixed by using fasteners. Optionally, the battery module 4 may further include a housing with an accommodating space, and the plurality of lithium-ion secondary batteries 5 are accommodated in the accommodating space.

In some embodiments, the lithium-ion secondary batteries 5 or battery modules 4 may be assembled into a battery pack 1, and the quantity of lithium-ion secondary batteries 5 or battery modules 4 included in the battery pack 1 may be chosen by persons skilled in the art based on application and capacity of the battery pack 1.

FIG. 3 and FIG. 4 show a battery pack 1 as an example. Referring to FIG. 3 and FIG. 4, the battery pack 1 may include a battery box and a plurality of battery cells arranged in the battery box. The battery box includes an upper box body 2 and a lower box body 3. The upper box body 2 can cover the lower box body 3 to form an enclosed space for accommodating the battery cells.

In addition, this application further provides an apparatus. The apparatus includes the battery pack provided in this application. The battery pack may be used as a power source of the apparatus or an energy storage unit of the apparatus. The apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

As the apparatus, a battery pack may be selected according to requirements for using the apparatus.

FIG. 5 shows an apparatus as an example. The apparatus is a battery electric vehicle, a hybrid electric vehicle, or a plug-in hybrid electric vehicle, or the like. To meet requirements of the apparatus for high power and high energy density of lithium-ion secondary batteries, a battery pack or a battery module may be used.

Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. Unless otherwise indicated, all content ratios are weight ratios, and all experiments are carried out at normal temperature and pressure.

The lithium-ion batteries in Examples 1to 12 and Comparative Examples 1 to 3 were prepared according to the following method.

**(1) Preparation of positive electrode plate**

LFP positive electrode: A positive electrode active material lithium iron phosphate, a conductive agent acetylene black, and a binder polyvinylidene fluoride (PVDF) at a weight ratio of 90:5:5 were dissolved in a solvent N-methylpyrrolidone (NMP), fully stirred and mixed to uniformity to obtain a positive electrode slurry. Then the positive electrode slurry was uniformly applied onto a positive electrode current collector, followed by drying, cold pressing, and slitting to obtain a positive electrode plate.

Ni0 positive electrode: A positive electrode active material $LiNi_{0.8}Co_{0.1}Mn_{0.1}O_2$ (NCM811), a conductive agent acetylene black, and a binder polyvinylidene fluoride (PVDF) at a weight ratio of 90:5:5 were dissolved in a solvent N-methylpyrrolidone (NMP), fully stirred and mixed to uniformity to obtain a positive electrode slurry. Then the positive electrode slurry was uniformly applied onto a positive electrode current collector, followed by drying, cold pressing, and slitting to obtain a positive electrode plate.

Ni1 positive electrode: A positive electrode active material $LiNi_{0.8}Co_{0.1}Mn_{0.1}O_2$ (NCM811), a conductive agent acetylene black, and a binder polyvinylidene fluoride (PVDF) at a weight ratio of 90:5:5 were dissolved in a solvent N-methylpyrrolidone (NMP) and added with 0.5 wt% 2,4,6,8-tetramethyl-2,4,6,8-tetraisocyanatocyclotetrasiloxane to obtain a mixture. The mixture was fully stirred and mixed to uniformity to obtain a positive electrode slurry. Then the positive electrode slurry was uniformly applied onto a positive electrode current collector, followed by drying, cold pressing, and slitting to obtain a positive electrode plate.

Ni2 positive electrode: A positive electrode active material $LiNi_{0.8}Co_{0.1}Mn_{0.1}O_2$ (NCM811) and 1,3,5-trimethyl-1,3,5-triisocyanatocyclotrisiloxane at a mass ratio of 98:2 were soaked in EMC, stirred for 24 h and filtered, dried under vacuum at 80°C for 12 h, and dissolved at a weight ratio of 90:5:5 together with a conductive agent acetylene black and a binder polyvinylidene fluoride (PVDF) in the solvent N-methylpyrrolidone (NMP) to obtain a mixture. The mixture was fully stirred and mixed to uniformity to obtain a positive electrode slurry. Then the positive electrode slurry was uniformly applied onto a positive electrode current collector, followed by drying, cold pressing, and slitting to obtain a positive electrode plate.

Ni3 positive electrode: A positive electrode active material $LiNi_{0.8}Co_{0.1}Mn_{0.1}O_2$ (NCM811), a conductive agent acetylene black, and a binder polyvinylidene fluoride (PVDF) at a weight ratio of 90:5:5 were dissolved in a solvent N-methylpyrrolidone (NMP) and added with 1 wt% octaphenylcyclotetrasiloxane to obtain a mixture. The mixture was fully stirred and mixed to uniformity to obtain a positive electrode slurry. Then the positive electrode slurry was uniformly applied onto a positive electrode current collector, followed by drying, cold pressing, and slitting to obtain a positive electrode plate.

**(2) Preparation of negative electrode plate**

C negative electrode: An active material artificial graphite, a conductive agent acetylene black, a binder styrene-butadiene rubber (SBR), and a thickener sodium carboxymethyl cellulose (CMC) at a weight ratio of 90:4:4:2 were dissolved in a solvent deionized water, and mixed to uniformity with the solvent deionized water to obtain a negative electrode slurry. Then the negative electrode slurry was uniformly applied onto a negative electrode current collector copper foil one or more times, dried to obtain a negative electrode film, followed by cold pressing and slitting, to obtain a negative electrode plate.

Si0 negative electrode: An active material silicon-carbon composite material (elemental silicon particles with a carbon coating layer on the surface, a gram capacity of 500 mAh/g, purchased from Betray, product model S500), a conductive agent acetylene black, a binder butadiene rubber (SBR), and a thickener sodium carboxymethyl cellulose (CMC) at a weight ratio of 90:4:4:2 were dissolved in a solvent deionized water, and mixed to uniformity to prepare a negative electrode slurry. Then the negative electrode slurry was uniformly applied onto a negative electrode current collector copper foil one or more times, dried to obtain a negative electrode film, followed by cold pressing and slitting, to obtain a negative electrode plate.

Si1 negative electrode: An active material silicon-carbon composite material, a conductive agent acetylene black, a binder styrene-butadiene rubber (SBR), and a thickener sodium carboxymethyl cellulose (CMC-Na) at a weight ratio of 90:4:4:2 were dissolved in a solvent deionized water and added with 2 wt% 1,3,5-trimethyl-1,3,5-trifluorocyclotrisiloxane to obtain a mixture. The mixture was mixed to uniformity to obtain a negative electrode slurry. Then the negative electrode slurry was uniformly applied onto a negative electrode current collector copper foil one or more times, dried to obtain a negative electrode film, followed by cold pressing and slitting, to obtain a negative electrode plate.

Si2 negative electrode: An active material silicon-carbon composite material and 2,4,6,8-tetramethyl-2,4,6,8-tetrachlorocyclotetrasiloxane at a weight ratio of 98:2 were soaked in a solvent deionized water, stirred for 24 h and filtered, dried under vacuum at 100°C for 24 h, and dissolved at a weight ratio of 90:4:4:2 together with a conductive agent acetylene black, a binder styrene-butadiene rubber (SBR), and a thickener sodium carboxymethyl cellulose (CMC) in the solvent deionized water to obtain a mixture. The mixture was mixed to uniformity to prepare a negative electrode slurry. Then the negative electrode slurry was uniformly applied onto a negative electrode current collector copper foil one or more times, dried to obtain a negative electrode film, followed by cold pressing and slitting, to obtain a negative electrode plate.

Si3 negative electrode: An active material silicon-carbon composite material and 1,3-dioxo-2-methyl-2-methoxysilylcyclopentane at a weight ratio of 98:2 were soaked in a solvent deionized water, stirred for 24 h and filtered, dried under vacuum at 100°C for 24 h, and dissolved at a weight ratio of 90:4:4:2 together with a conductive agent acetylene black, a binder styrene-butadiene rubber (SBR), and a thickener sodium carboxymethyl cellulose (CMC) in the solvent deionized water to obtain a mixture. The mixture was mixed to uniformity to prepare a negative electrode slurry. Then the negative electrode slurry was uniformly applied onto a negative electrode current collector copper foil one or more times, dried to obtain a negative electrode film, followed by cold pressing and slitting, to obtain a negative electrode plate.

Si4 negative electrode: An active material silicon-carbon composite material, a conductive agent acetylene black, a binder styrene-butadiene rubber (SBR), and a thickener sodium carboxymethyl cellulose (CMC-Na) at a weight ratio of 90:4:4:2 were dissolved in a solvent deionized water and added with 1 wt% octamethylcyclotetrasiloxane to obtain a mixture. The mixture was mixed to uniformity to obtain a negative electrode slurry. Then the negative electrode slurry was uniformly applied onto a negative electrode current collector copper foil one or more times, dried to obtain a negative electrode film, followed by cold pressing and slitting, to obtain a negative electrode plate.

### (3) Preparation of electrolyte

E0 electrolyte: In an argon atmosphere glove box ($H_2O$<0.1 ppm, $O_2$<0.1 ppm), organic solvents EC/EMC were mixed to uniformity at a volume ratio of 3/7, and 12.5% $LiPF_6$ lithium salt was added and dissolved in the organic solvents to obtain a mixture. The mixture was stirred to uniformity to obtain a corresponding electrolyte.

EL1 electrolyte: In an argon atmosphere glove box ($H_2O$<0.1 ppm, $O_2$<0.1ppm), organic solvents EC/EMC were mixed to uniformity at a volume ratio of 3/7, 12.5% $LiPF_6$ lithium salt was added and dissolved in the organic solvents, and 1% 2,4,6,8-tetramethyl-2,4,6,8-tetrafluorocyclotetrasiloxane was added as an additive to obtain a mixture. The mixture was stirred to uniformity to obtain a corresponding electrolyte.

EL2 electrolyte: In an argon atmosphere glove box ($H_2O$<0.1 ppm, $O_2$<0.1 ppm), organic solvents EC/EMC were mixed to uniformity at a volume ratio of 3/7, 12.5% $LiPF_6$ lithium salt was added and dissolved in the organic solvents, and 3% 1,3,5-trimethyl-1,3,5-trinitrile cyclotrisiloxane was added as an additive to obtain a mixture. The mixture was stirred to uniformity to obtain a corresponding electrolyte.

EL3 electrolyte: In an argon atmosphere glove box ($H_2O$<0.1 ppm, $O_2$<0.1 ppm), organic solvents EC/EMC were mixed to uniformity at a volume ratio of 3/7, 12.5% $LiPF_6$ lithium salt was added and dissolved in the organic solvents, and 2% 8 fluorocyclotetrasiloxane was added as an additive to obtain a mixture. The mixture was stirred to uniformity to obtain a corresponding electrolyte.

EL4 electrolyte: In an argon atmosphere glove box ($H_2O$<0.1 ppm, $O_2$<0.1 ppm), organic solvents EC/EMC were mixed to uniformity at a volume ratio of 3/7, 12.5% $LiPF_6$ lithium salt was added and dissolved in the organic solvents, and 2% hexamethoxydisiloxane was added as an additive to obtain a mixture. The mixture was stirred to uniformity to obtain a corresponding electrolyte.

EL5 electrolyte: In an argon atmosphere glove box ($H_2O$<0.1 ppm, $O_2$<0.1 ppm), organic solvents EC/EMC were mixed to uniformity at a volume ratio of 3/7, 12.5% $LiPF_6$ lithium salt was added and dissolved in the organic solvents, and 2% decamethylcyclopentasiloxane was added as an additive to obtain a mixture. The mixture was stirred to uniformity to obtain a corresponding electrolyte.

### (4) Preparation of lithium-ion secondary battery

A PE porous film coated with a 2 μm-thick ceramic coating was used as a separator. A positive electrode plate,

a separator, and a negative electrode plate were stacked in sequence, so that the separator is placed between the positive and negative electrode plates for separation, and then winding was performed to obtain an electrode assembly. The electrode assembly was placed into a battery housing that then was dried and filled with an electrolyte, and a lithium-ion secondary battery was obtained after processes such as formation and standing.

**Table 1: Compositions of lithium-ion secondary batteries in Comparative Examples 1 to 3 and Examples 1 to 12**

| No. | Positive electrode | Negative electrode | Electrolyte |
|---|---|---|---|
| Comparative Example 1 | LFP positive electrode | Si0 negative electrode | EL0 electrolyte |
| Comparative Example 2 | Ni0 positive electrode | C negative electrode | EL0 electrolyte |
| Comparative Example 3 | Ni0 positive electrode | Si0 negative electrode | EL0 electrolyte |
| Example 1 | LFP positive electrode | Si1 negative electrode | EL0 electrolyte |
| Example 2 | LFP positive electrode | Si2 negative electrode | EL0 electrolyte |
| Example 3 | LFP positive electrode | Si3 negative electrode | EL0 electrolyte |
| Example 4 | LFP positive electrode | Si4 negative electrode | EL0 electrolyte |
| Example 5 | Ni1 positive electrode | C negative electrode | EL0 electrolyte |
| Example 6 | Ni2 positive electrode | C negative electrode | EL0 electrolyte |
| Example 7 | Ni3 positive electrode | C negative electrode | EL0 electrolyte |
| Example 8 | Ni0 positive electrode | Si0 negative electrode | EL1 electrolyte |
| Example 9 | Ni0 positive electrode | Si0 negative electrode | EL2 electrolyte |
| Example 10 | Ni0 positive electrode | Si0 negative electrode | EL3 electrolyte |
| Example 11 | Ni0 positive electrode | Si0 negative electrode | EL4 electrolyte |
| Example 12 | Ni0 positive electrode | Si0 negative electrode | EL5 electrolyte |

The following describes test methods for relevant parameters.

1. Cell internal resistance (mQ)

At 25°C, a secondary battery and another secondary battery after 800 cycles at 45°C were charged to 4.3 V at a constant current of 1C, then charged at a constant voltage of 4.3 V until the current was less than 0.05C, and then discharged at 1C for 30 minutes so that the power of the cell was adjusted to 50% SOC. Then, positive and negative test leads of a TH2523A AC internal resistance tester were made into contact with positive and negative electrodes of the batteries respectively, and internal resistance values of the batteries were read through the internal resistance tester and recorded as an initial cell internal resistance and a cell internal resistance after 800 cycles respectively.

2. Capacity retention rate after 800 cycles at 45°C

At 45°C, a secondary battery was charged to 4.3 V at a constant current of 1C, then charged at a constant voltage of 4.3 V until the current was less than 0.05C, and then discharged to 3.0 V at a constant current of 1C. This was one charge-discharge cycle. Charging and discharging were performed as such repeatedly. A capacity retention rate of the lithium-ion battery after 800 cycles was calculated.

$$\text{Capacity retention rate (\%) of secondary battery after 800 cycles at 45°C} = (\text{discharge capacity at the 800-th cycle / discharge capacity at the first cycle}) \times 100\%.$$

3. Volume swelling ratio after 50 days of storage at 60°C

At 25°C, a secondary battery was charged to 4.3 V at a constant current of 1C, then charged at a constant voltage of 4.3 V until the current was less than 0.05C, and the volume of the secondary battery at that moment was tested and denoted as V1. Then the fully charged secondary battery was put into an incubator at 60°C and stored for 50 days, and the volume was measured by a drainage method and denoted as V2.

$$\text{Volume swelling ratio (\%) of secondary battery after 50 days of storage at } 60°\text{C} = (V2-V1)/V1 \times 100\%.$$

**Table 2: Cycling test results for lithium-ion secondary batteries in Comparative Example 1 and Examples 1 to 4**

| No. | Initial cell internal resistance (mΩ) | Cell internal resistance after 800 cycles (mΩ) | Capacity retention rate after 800 cycles at 45°C | Volume swelling ratio after 100 days of storage at 60°C |
|---|---|---|---|---|
| Comparative Example 1 | 864 | 1051 | 24 | 46 |
| Example 1 | 531 | 691 | 50 | 21 |
| Example 2 | 631 | 873 | 42 | 26 |
| Example 3 | 763 | 960 | 35 | 31 |
| Example 4 | 860 | 1050 | 25 | 46 |

In Comparative Example 1, the use of the unmodified silicon-carbon composite material as the negative electrode results in poor cycle life of the battery. This is mainly because the silicon-carbon composite material has a large volume effect during delithiation and lithiation, which leads to fracture and regeneration of interface components and generation of thicker interface components during cycling, resulting in a relatively large cell internal resistance after 800 cycles. The re-growth of the interface requires consumption of active lithium, which also leads to a rapid decrease in capacity retention rate during cycling. In addition, due to the continuous consumption of the electrolyte, more gas is generated, resulting in a more severe volume swelling after storage at 60°C.

In Examples 1-3, the interface of the negative electrode made of the silicon-carbon composite material is covered by cyclic siloxane containing a strong electron withdrawing group. During charging and discharging, $PF_5$ and HF in the electrolyte are combined with such cyclic siloxane, facilitating ring-opening polymerization of the cyclic siloxane to form a silicone rubber-like structure. Such silicone rubber-like structure can adapt to the volume effect of silicon, stabilize the electrode interface, and inhibit the decomposition of the electrolyte. This improves the impedance and capacity retention rate of the cell before and after cycling, and effectively mitigates the volume swelling of the material.

Although the silicon-carbon composite material in Example 4 is also covered by siloxane with an eight-membered ring, there is no strong electron withdrawing group linked to the silicon atom of such cyclic siloxane. In such siloxane, a chain initiation process of ring-opening polymerization is less likely to occur and a siloxane-like structure is less likely to be generated, which provides no significant improvement in cell performance.

**Table 3: Cycling test results for lithium-ion secondary batteries in Comparative Example 2 and Examples 5 to 7**

| No. | Initial cell internal resistance (mΩ) | Cell internal resistance after 800 cycles (mΩ) | Capacity retention rate after 800 cycles at 45°C | Volume swelling ratio after 50 days of storage at 60°C |
|---|---|---|---|---|
| Comparative Example 2 | 700 | 901 | 40 | 23 |
| Example 5 | 493 | 706 | 60 | 11 |
| Example 6 | 601 | 811 | 51 | 16 |
| Example 7 | 700 | 900 | 41 | 23 |

In Comparative Example 2, the use of the unmodified high-nickel material as the positive electrode results in poor cell cycle life. This is mainly because the volume effect and catalytically active $Ni^{4+}$ during delithiation of the high-nickel material lead to increased interface instability. The unstable interface structure deteriorates the capacity retention rate during cycling and increases the internal resistance and gas production.

In Example 5 and Example 6, the interface of the positive electrode made of the high-nickel material is covered by cyclic siloxane containing a strong electron withdrawing group. During charging and discharging, $PF_5$ and HF in the electrolyte are combined with this cyclic siloxane, facilitating ring-opening polymerization of the cyclic siloxane to form a silicone rubber-like structure. Such silicone rubber-like structure can adapt to the volume effect of the high-nickel material, stabilize the electrode interface, and inhibit the decomposition of the electrolyte. This improves the impedance and capacity retention rate of the cell before and after cycling, and effectively inhibits the volume swelling of the material.

Although the positive electrode made of the high-nickel material in Example 7 is also covered by siloxane with an eight-membered ring, there is no strong electron withdrawing group directly linked to the silicon atom of such cyclic siloxane. In such siloxane, a chain initiation process of ring-opening polymerization is less likely to occur and a siloxane-like structure is less likely to be generated, which provides no significant improvement in cell performance.

**Table 4: Cycling test results for lithium-ion secondary batteries in Comparative Example 3 and Examples 8 to 12**

| No. | Initial cell internal resistance (mΩ) | Cell internal resistance after 800 cycles (mΩ) | Capacity retention rate after 800 cycles at 45°C | Volume swelling ratio after 50 days of storage at 60°C |
|---|---|---|---|---|
| Comparative Example 3 | 1009 | 1328 | 10 | 55 |
| Example 8 | 653 | 986 | 46 | 23 |
| Example 9 | 796 | 1093 | 32 | 30 |
| Example 10 | 901 | 1203 | 21 | 43 |
| Example 11 | 1000 | 1320 | 11 | 55 |
| Example 12 | 1008 | 1326 | 10 | 55 |

In Comparative Example 3, the use of the unmodified electrolyte in a system with unmodified high-nickel positive electrode material and silicon-carbon negative electrode material results in poor cell cycle life. This is mainly because catalytic activity of the interface of the positive electrode made of the high-nickel material and the huge volume effect of the negative electrode made of the silicon-carbon material leads to the instability of the interface components of the positive electrode and/or negative electrode. The increased instability of the interface structure deteriorates the cell performance, reduces the capacity retention rate, and leads to a higher volume swelling rate.

The electrolytes used in Example 8 and Example 9 contain cyclic siloxane, and a group contained in one and only one of the branched groups $R_1$ and $R_2$ of the silicon atoms in the cyclic structure of the cyclic siloxane has a stronger electron withdrawing property than $-C_6H_5$ and is directly linked to Si, which can increase the electropositivity of the silicon atoms. Such cyclic siloxane containing strong electron withdrawing groups can undergo ring-opening polymerization in weakly acidic electrolytes containing small amounts of $PF_5$ and HF to form a silicon-like rubber structure. Such silicone rubber-like structure can adapt to the volume effect of the silicon-carbon negative electrode and the high-nickel positive electrode, stabilize the electrode interface, and inhibit the decomposition of electrolyte. This improves the impedance and capacity retention rate of the cell before and after cycling, and effectively inhibits the volume swelling of the material.

Cyclic siloxane is used in the electrolytes of Examples 10-12, but in which two groups directly linked to silicon are both strong electron withdrawing groups, or chain siloxane and cyclic siloxane that has more than eight ring members are used. In such siloxanes, a chain initiation process of ring-opening polymerization is less likely to occur and a silicone rubber-like structure is less likely to be generated, which provides no significant improvement in cell performance.

Although this application has been described with reference to the embodiments, various modifications can be made to this application without departing from the scope of this application and the components therein can be replaced with their equivalents. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A secondary battery containing cyclic siloxane and/or ring-opening polymerization derivatives thereof, wherein a cyclic structure of the cyclic siloxane has at least one

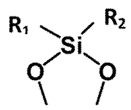

structure, one and only one of $R_1$ and $R_2$ contains a group with stronger electron withdrawing property than phenyl, and the group is directly linked to Si.

2. The secondary battery according to claim 1, wherein the cyclic siloxane and/or ring-opening polymerization derivatives thereof are contained in an electrolyte, a positive electrode active material, and/or a negative electrode active material of the secondary battery.

3. The secondary battery according to claim 1 or 2, wherein the cyclic siloxane has a cyclic structure of 3- to 8-membered ring.

4. The secondary battery according to any one of claims 1 to 3, wherein the cyclic siloxane has a cyclic structure of a 5-membered ring, a 6-membered ring, or an 8-membered ring.

5. The secondary battery according to any one of claims 1 to 4, wherein the cyclic siloxane has a structure shown below in formula 1 to formula 19:

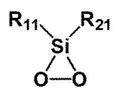
formula 1

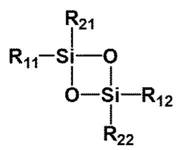
formula 2

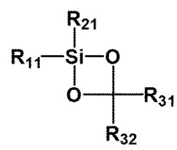
formula 3

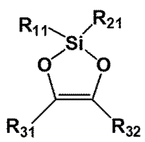
formula 4

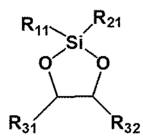
formula 5

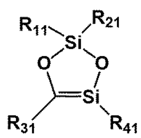
formula 6

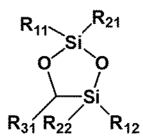
formula 7

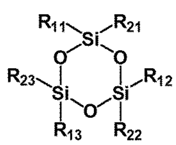
formula 8

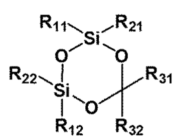
formula 9

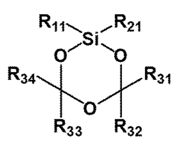
formula 10

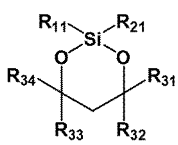
formula 11

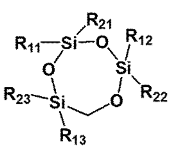
formula 12

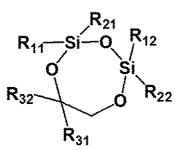
formula 13

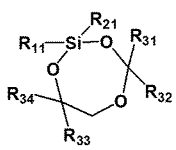
formula 14

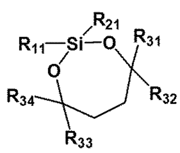
formula 15

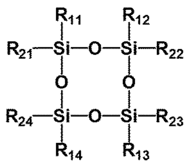 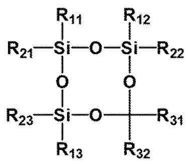 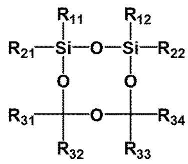 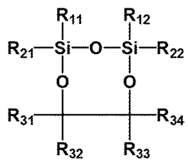

formula 16 formula 17 formula 18 formula 19

wherein $R_{11}$ to $R_{12}$, $R_{21}$ to $R_{24}$, and $R_{31}$ to $R_{34}$ are each independently selected from H, halogen, substituted or unsubstituted $C_1$-$C_{10}$ alkyl, substituted or unsubstituted $C_2$-$C_{10}$ alkenyl, substituted or unsubstituted $C_2$-$C_{10}$ alkynyl, substituted or unsubstituted $C_1$-$C_{10}$ alkoxy, substituted or unsubstituted $C_6$-$C_{14}$ aryl, cyano, carboxyl, carbonyl, ester, hydroxyl, nitro, sulfonate, sulfinate, or isocyanato, wherein in the case of substitution, the substituent is selected from halogen, or

two groups in $R_{11}$ to $R_{16}$ and $R_{21}$ to $R_{24}$ form a 4- to 6-membered heterocyclic ring together with the groups linked thereto, or

the ring-opening polymerization derivatives are derived from a cyclic siloxane having the structure shown in formula 1 to formula 19,

provided that in the cyclic siloxane, one and only one of $R_1$ and $R_2$ in at least one

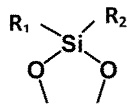

structure of the cyclic structure contains a group with stronger electron withdrawing property than phenyl and that the group is directly linked to Si, wherein the group with stronger electron withdrawing property than phenyl is selected from halogen, substituted or unsubstituted $C_2$-$C_{10}$ alkynyl, substituted or unsubstituted $C_1$-$C_{10}$ alkoxy, cyano, carboxyl, carbonyl, ester, hydroxyl, nitro, sulfonate, sulfinate, or isocyanato, wherein in the case of substitution, the substituent is selected from halogen.

**6.** The secondary battery according to claim 5, wherein in a cyclic structure of the cyclic siloxane, one and only one of $R_1$ and $R_2$ in all

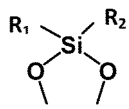

structures contains a group with stronger electron withdrawing property than phenyl, and the group is directly linked to Si.

**7.** The secondary battery according to claim 5 or 6, wherein the cyclic structure of the cyclic siloxane does not include the following

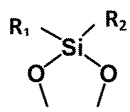

structures, wherein both $R_1$ and $R_2$ contain a group with stronger electron withdrawing property than phenyl, and the group is directly linked to Si.

**8.** The secondary battery according to any one of claims 5 to 7, wherein the cyclic siloxane has a structure selected from one or more of formula 4, formula 5, formula 8, and formula 16.

**9.** The secondary battery according to any one of claims 5 to 8, wherein $R_{11}$ to $R_{12}$, $R_{21}$ to $R_{24}$, and $R_{31}$ to $R_{34}$ are each independently selected from H, halogen, $C_1$-$C_6$ alkyl, $C_1$-$C_6$ alkoxy, isocyanato, or cyano.

**10.** The secondary battery according to any one of claims 5 to 9, wherein

the silicate has the structure of formula 5, wherein $R_{11}$ is methyl, $R_{21}$ is methoxy, and both $R_{31}$ and $R_{32}$ are H; or
the silicate has the structure of formula 8, wherein $R_{11}$ to $R_{13}$ are all methyl, and $R_{21}$ to $R_{23}$ are selected from isocyanato or cyano; or
the silicate has the structure of formula 13, wherein $R_{11}$ to $R_{14}$ are all methyl, and $R_{21}$ to $R_{24}$ are selected from isocyanato or halogen.

**11.** The secondary battery according to any one of claims 1 to 10, wherein a percentage of the cyclic silicate in each material portion of the secondary battery is 0.001 wt%-20 wt%.

**12.** The secondary battery according to any one of claims 2 to 11, wherein a percentage of the cyclic silicate in a positive electrode active material is 0.05-3 wt% based on a weight of the positive electrode active material.

**13.** The secondary battery according to any one of claims 2 to 12, wherein a percentage of the cyclic silicate in a negative electrode active material is 0.5-15 wt% based on a weight of the negative electrode active material.

**14.** The secondary battery according to any one of claims 2 to 13, wherein a percentage of the cyclic silicate as an additive in an electrolyte is 0.1-5 wt% based on a weight of the electrolyte.

**15.** The secondary battery according to any one of claims 1 to 14, wherein the positive electrode active material of the secondary battery is selected from one or more of lithium iron phosphate, lithium manganese iron phosphate, lithium cobalt oxide, lithium nickel oxide, lithium manganese oxide, lithium nickel manganese oxide, lithium nickel cobalt manganese oxide, lithium nickel cobalt aluminum oxides, lithium-rich materials, sodium oxide compounds, potassium oxide compounds, and compounds obtained by adding other transition metals or non-transition metals to the foregoing compounds.

**16.** The secondary battery according to any one of claims 1 to 15, wherein the negative electrode active material of the secondary battery is selected from one or more of graphite, soft carbon, hard carbon, mesocarbon microbeads, carbon fibers, carbon nanotubes, elemental silicon, silicon oxide compounds, silicon-carbon composites, lithium titanate, lithium metal, sodium metal, potassium metal, and compounds obtained by adding other transition metals or non-transition metals to the foregoing materials.

**17.** The secondary battery according to any one of claims 1 to 16, further comprising an organic solvent selected from one or more of linear carbonates, cyclic carbonates, carboxylates, and ethers.

**18.** The secondary battery according to claim 17, wherein the organic solvent comprises one or more of diethyl carbonate, dipropyl carbonate, ethyl methyl carbonate, methyl propyl carbonate, ethylene propyl carbonate, ethylene carbonate, propylene carbonate, butylene carbonate, $\gamma$-butyrolactone, methyl formate, ethyl acetate ester, propyl acetate, methyl propionate, ethyl propionate, tetrahydrofuran, dimethyl ether, diethyl ether, and ethylene glycol dimethyl ether.

**19.** The secondary battery according to any one of claims 1 to 18, further comprising an electrolyte additive selected from one or more of a cyclic carbonate compound containing unsaturated bonds, a cyclic carbonate compound substituted by halogen, a sulfate compound, a sulfite compound, a sultone compound, a disulfonate compound, a nitrile compound, an aromatic compound, an isocyanate compound, a phosphonitrile compound, a cyclic anhydride compound, a phosphite compound, a phosphate compound, a borate compound, and a carboxylate compound.

**20.** The secondary battery according to any one of claims 1 to 19, further comprising an electrolytic salt selected from one or more of $LiPF_6$, $LiBF_4$, LiBOB, $LiAsF_6$, $Li(FSO_2)_2N$, $LiCF_3SO_3$, and $LiClO_4$.

**21.** A battery pack comprising the secondary battery according to any one of claims 1 to 20.

**22.** An electric apparatus comprising the secondary battery according to any one of claims 1 to 20 or the battery pack according to claim 21.

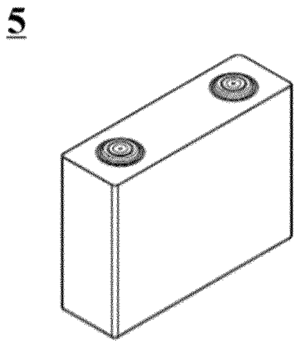


FIG. 1

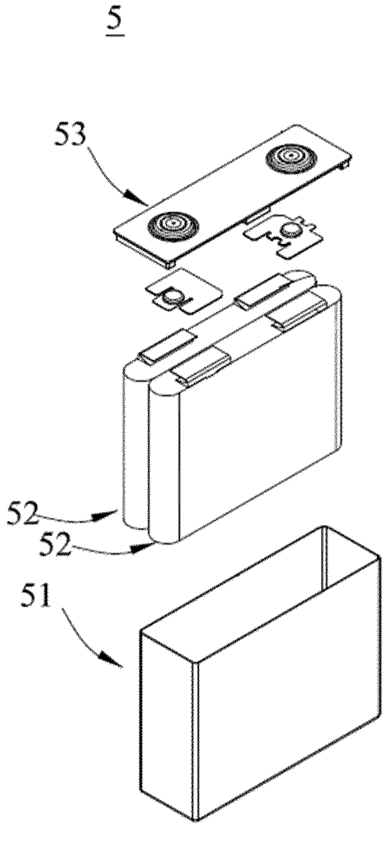


FIG. 2

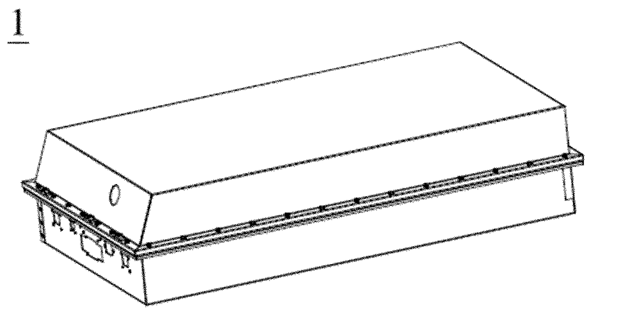


FIG. 3

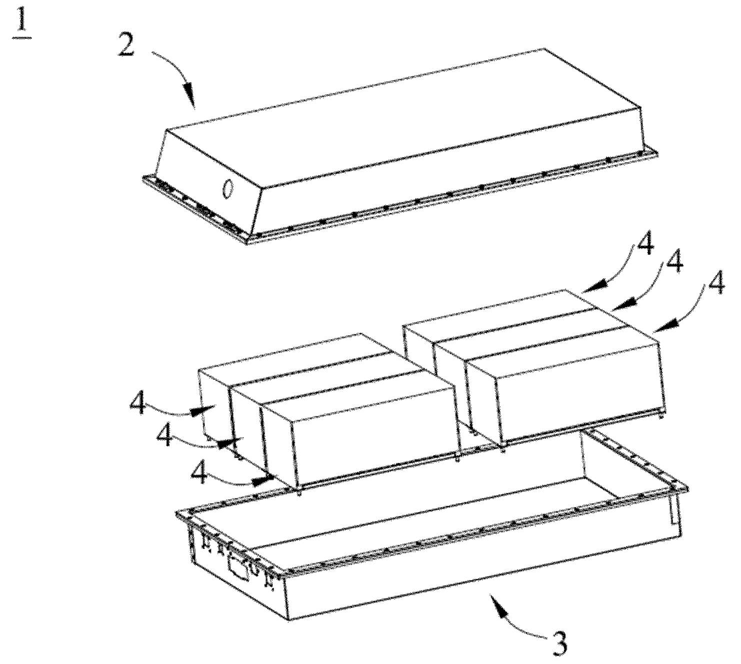


FIG. 4

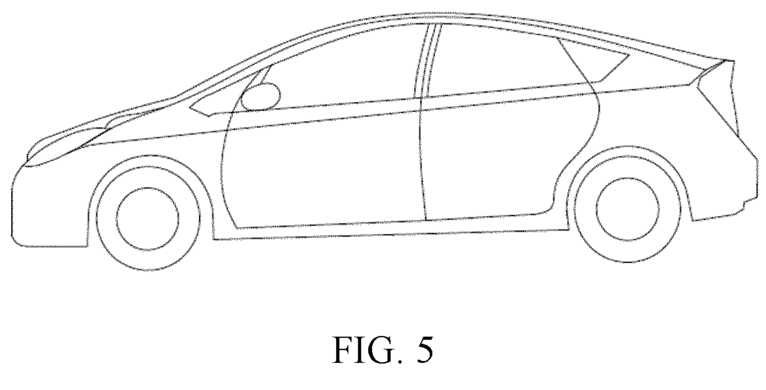

FIG. 5

**INTERNATIONAL SEARCH REPORT**

International application No.
**PCT/CN2022/091649**

**A. CLASSIFICATION OF SUBJECT MATTER**

H01M 10/0567(2010.01)i; H01M 10/0563(2010.01)i; H01M 10/0525(2010.01)i; H01M 4/58(2010.01)i; H01M 4/02(2006.01)i; H01M 4/36(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 电池, 电芯, 电解液, 正极, 负极, 阴极, 阳极, 电解质, 环, 硅氧烷, 界面, 稳定, 弹性, 体积, 膨胀, battery, cell?, electrolyte, siloxane, cycl+, interface, SEI

**C. DOCUMENTS CONSIDERED TO BE RELEVANT**

| Category* | Citation of document, with indication, where appropriate, of the relevant passages | Relevant to claim No. |
|---|---|---|
| X | CN 113839093 A (HUZHOU KUNLUN ENCHEM BATTERY MATERIALS CO., LTD.) 24 December 2021 (2021-12-24)<br>description, paragraphs [0007]-[0141] | 1-22 |
| X | US 2010330433 A1 (AMINE KHALIL et al.) 30 December 2010 (2010-12-30)<br>description, paragraphs [0010]-[0107] | 1-22 |
| X | CN 111883831 A (XIANGHE KUNLUN CHEMICALS CO., LTD.) 03 November 2020 (2020-11-03)<br>description, paragraphs [0005]-[0080] | 1-22 |
| X | CN 112768770 A (HUIZHOU LIWINON NEW ENERGY TECHNOLOGY CO., LTD.) 07 May 2021 (2021-05-07)<br>description, paragraphs [0004]-[0073] | 1-22 |
| A | CN 113889666 A (TIANJIN LISHEN BATTERY JOINT-STOCK CO., LTD.) 04 January 2022 (2022-01-04)<br>entire document | 1-22 |
| A | US 2020203764 A1 (ENEVATE CORP.) 25 June 2020 (2020-06-25)<br>entire document | 1-22 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 November 2022** | **18 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/091649**

**C. DOCUMENTS CONSIDERED TO BE RELEVANT**

| Category* | Citation of document, with indication, where appropriate, of the relevant passages | Relevant to claim No. |
|---|---|---|
| A | US 2022059842 A1 (UCHICAGO ARGONNE LLC.) 24 February 2022 (2022-02-24) entire document | 1-22 |

Form PCT/ISA/210 (second sheet) (January 2015)

**INTERNATIONAL SEARCH REPORT**
**Information on patent family members**

International application No.
**PCT/CN2022/091649**

| Patent document cited in search report | | | Publication date (day/month/year) | Patent family member(s) | | | Publication date (day/month/year) |
|---|---|---|---|---|---|---|---|
| CN | 113839093 | A | 24 December 2021 | None | | | |
| US | 2010330433 | A1 | 30 December 2010 | US | 8492033 | B2 | 23 July 2013 |
| CN | 111883831 | A | 03 November 2020 | None | | | |
| CN | 112768770 | A | 07 May 2021 | None | | | |
| CN | 113889666 | A | 04 January 2022 | None | | | |
| US | 2020203764 | A1 | 25 June 2020 | US | 2022052380 | A1 | 17 February 2022 |
| | | | | WO | 2020132072 | A1 | 25 June 2020 |
| | | | | US | 11165099 | B2 | 02 November 2021 |
| US | 2022059842 | A1 | 24 February 2022 | None | | | |

Form PCT/ISA/210 (patent family annex) (January 2015)